# EUROPÄISCHE PATENTSCHRIFT

(11) **EP 3 625 520 B1**
(45) Veröffentlichungstag und Bekanntmachung des Hinweises auf die Patenterteilung: **02.04.2025**
(21) Anmeldenummer: 18716607.9
(22) Anmeldetag: 09.04.2018
(51) Int. Cl.: G01C 21/36, G01W 1/02

(54) **VERFAHREN UND VORRICHTUNG ZUM ERMITTELN EINES WETTERGEBIETS**
METHOD AND DEVICE FOR DETERMINING A WEATHER AREA
PROCÉDÉ ET DISPOSITIF PERMETTANT DE DÉTERMINER UNE ZONE MÉTÉOROLOGIQUE

(30) Priorität: 15.05.2017 DE 102017208123
(43) Veröffentlichungstag der Anmeldung: 25.03.2020
(73) Patentinhaber: Bayerische Motoren Werke Aktiengesellschaft, 80809 München (DE)
(72) Erfinder: SCHUTZMEIER, Thomas, 81541 München (DE); HOLDER, Stefan, 80686 München (DE); WINCKLER, Andreas, 81249 München (DE)
(86) Internationale Anmeldenummer: PCT/EP2018/058984
(87) Internationale Veröffentlichungsnummer: WO 2018/210487

(56) Entgegenhaltungen:
- EP-A1- 3 318 846
- EP-A2- 1 321 742
- DE-A1- 102007 063 011
- DE-A1- 102015 209 602
- JP-A- H11 316 126
- US-A1- 2008 215 202
- US-A1- 2012 215 446

## Beschreibung

Die Erfindung betrifft ein Verfahren, eine Vorrichtung und ein System zum Ermitteln eines Wettergebiets, welche jeweils ein zuverlässiges und präzises Erfassen eines Wettergebiets ermöglichen und zu einer geringen Falschmeldungsrate beitragen.

Kraftfahrzeuge weisen in der Regel eine Vielzahl von Sensoren und Navigationssysteme auf, welche ein Erfassen von verschiedenen Messgrößen mit zugehöriger Ortreferenz ermöglichen. Mittels einer in einem Kraftfahrzeug verbauten Sensorik besteht die Möglichkeit Informationen über aktuelle Wettereigenschaften zu gewinnen und diese Informationen in den Straßenverkehr mit einzubringen. Daher ist es ein Anliegen, genaue Wetterinformationen zu generieren und Falschmeldungen gering zu halten.

Die Druckschrift DE 102007063011 A1 offenbart ein Navigationssystem für ein Kraftfahrzeug, das zur Verfügung stehende Rohdaten von Wetterinformationen zur Routenberechnung bzw. Routenanpassung nutzt. Das Navigationssystem erhält über eine Datenverbindung Wetterdaten ausgedehnter Wettergebiete aus mindestens einer ersten Informationsquelle, die mit Gelände- und/oder Positionsdaten des Kraftfahrzeuges, aus mindestens einer zweiten Informationsquelle, überlagert werden, sodass Anwendungen des Navigationssystems unter Berücksichtigung der ausgedehnten Wettergebiete ausführbar sind.

Die Druckschrift US 2008/215202 A1 offenbart ein Verfahren und ein System, die auf Basis einer einzugebenden Telefonnummer auf einem Mobiltelefon ein Führen einer Person zu einem Ort ermöglichen. Wenn sich die Person in einem Fahrzeug befindet, kann das Fahrzeug in seiner Gesamtheit automatisch zum physischen Ort geführt werden.

Die Druckschrift JP H11 316126 A offenbart ein Navigationsgerät für ein Kraftfahrzeug, das dazu eingerichtet ist, eine Routensuche unter Berücksichtigung von Wetterinformationen durchzuführen, die von einem meteorologischen Satelliten bereitstellt sind. Das Navigationsgerät ist mit einem atmosphärischen Sensor zum Messen der Außenlufttemperatur oder des atmosphärischen Drucks und mit dem meteorologischen Satelliten funktechnisch verbunden. Dabei können Positionsinformationen und Wetterinformationen überlagert in Form von Kartendaten angezeigt werden.

Es ist eine Aufgabe, die der Erfindung zugrunde liegt, ein Verfahren, eine Vorrichtung und ein System zum Ermitteln eines Wettergebiets zu schaffen, welche jeweils ein zuverlässiges und präzises Erfassen eines Wettergebiets ermöglichen und zu einer geringen Falschmeldungsrate beitragen.

Die Aufgabe wird durch die Merkmale der unabhängigen Patentansprüche gelöst. Vorteilhafte Ausgestaltungen der Erfindung sind in den Unteransprüchen angegeben.

Gemäß einem Aspekt der Erfindung umfasst ein Verfahren zum Ermitteln eines Wettergebiets für ein Kraftfahrzeug, dem eine Sensorik und eine Kommunikationsschnittstelle zugeordnet sind, die signaltechnisch miteinander gekoppelt sind, ein Empfangen von Daten, die geographische Informationen in Form einer Karte umfassen, und ein Erstellen eines Rasters mittels Unterteilen der empfangenen Daten in eine Mehrzahl von zueinander angrenzenden Gitterzellen. Das Verfahren umfasst weiter ein Bereitstellen eines Messsignals der Sensorik, das repräsentativ ist für eine ortbezogene lokale Wettersituation in einer der Gitterzellen, und ein Ermitteln eines lokalen Wettergebiets für eine jeweilige Gitterzelle in Abhängigkeit von dem bereitgestellten Messsignal. Außerdem umfasst das Verfahren ein Setzen jeweils eines numerischen Zählers für eine jeweilige Gitterzelle, welcher in Abhängigkeit von dem Messsignal der Sensorik einen vorgegeben Wert aufweist, wobei der numerischen Zähler eine Information beinhaltet, dass ein Wettergebiet ermittelt wurde und der Zustand einer zugehörigen Gitterzelle als "aktiv" gesetzt ist, und ein Inkrementieren des jeweiligen numerischen Zählers der Gitterzelle, wenn für die Gitterzelle ein Messsignal der Sensorik bereitgestellt und/oder ein Wettergebiet ermittelt wird. Außerdem umfasst das Verfahren ein Setzen jeweils eines zeitlichen Zählers für eine jeweilige Gitterzelle, welcher in Abhängigkeit von dem Messsignal der Sensorik einen vorgegeben Wert aufweist und repräsentativ ist für eine vorgegebene Zeitspanne, wobei nach Ablaufen der vorgegebenen Zeitspanne der Zustand der Gitterzelle auf "nicht aktiv" gesetzt wird und Neusetzen des jeweiligen zeitlichen Zählers der Gitterzelle, für die ein Messsignal der Sensorik bereitgestellt und/oder ein Wettergebiet ermittelt wird.

Mittels des beschriebenen Verfahrens ist ein zuverlässiges und ortsgenaues Erkennen eines Wettergebiets möglich, welches insbesondere zu einer geringen Falschmeldungsrate beitragen kann. Das Wettergebiet wird dabei auf Basis der empfangenen kartographierten Daten und des erstellten Rasters einer oder mehreren Gitterzellen zugeordnet und kann somit in einem entsprechenden Bereich lokalisiert werden. Ein solcher Bereich umfasst eine oder mehrere Gitterzellen, die beispielsweise jeweils eine Kantenlänge von einem Kilometer aufweisen. Somit wird zum Beispiel für zueinander benachbarte Straßen ein Wettergebiet nicht nur für eine Straße ermittelt, auf der das jeweilige Kraftfahrzeug gerade fährt, sondern das ermittelte Wettergebiet umfasst auch die Fahrtwege, die sich innerhalb der jeweiligen Gitterzellen befinden.

Der numerische Zähler umfasst die Information, dass ein Wettergebiet ermittelt wurde und der Zustand einer zugehörigen Gitterzelle als "aktiv" gesetzt ist. Der vorgegebene zeitliche Zähler vermeidet Doppelmeldungen eines Kraftfahrzeugs innerhalb der vorgegebenen Zeitspanne, sodass nach Ablaufen einer solchen Zeitspanne, der Zustand der Gitterzelle auf "nicht aktiv" gesetzt wird und daraufhin ein ermitteln des Wettergebiets mit dem Kraftfahrzeug innerhalb dieser Gitterzelle wieder möglich ist.

Ein Inkrementieren oder Neusetzen des numerischen und/oder zeitlichen Zählers kann darüber hinaus für die Gitterzelle durchgeführt werden, für die ein Wettergebiet ermittelt wird und außerdem für die zu dieser Gitterzelle benachbarten beziehungsweise angrenzenden Gitterzellen.

Die Daten, die geographische Informationen in Form einer Land- oder Straßenkarte enthalten, können insbesondere auf einer externen Servereinheit oder durch einen Kartenhersteller bereitgestellt sein und im Rahmen des Verfahrens abgerufen werden. Das beschriebene Verfahren realisiert somit insbesondere eine georeferenzierte Fusion von ermittelten Wetterdaten mit verfügbaren Kartendaten, sodass ein einfaches und zuverlässiges Ermitteln und Lokalisieren des Wettergebiets erzielbar ist.

Im Rahmen des Verfahrens können insbesondere eine Mehrzahl von ermittelten Wettergebieten in zugehörigen Gitterzellen bereitgestellt, ausgewertet und miteinander verglichen werden, sodass ein jeweiliges ermitteltes Wettergebiet durch ein weiteres Kraftfahrzeug verifiziert werden kann, um zu einem besonders genauen und fehlerarmen Erfassen eines zusammenhängenden Wettergebiets beizutragen. Die zu verarbeitenden Daten, welche geographische Informationen sowie die aufgenommenen georeferenzierte Informationen über ein lokales Wettergebiet enthalten, können an eine Servereinheit oder ein Backend gesendet und in einer zugehörigen Datenbank hinterlegt und verarbeitet werden. Dabei beinhalten die erfassten Messgrößen oder generierten Messsignale insbesondere Positionsinformationen, die zum Beispiel mittels eines Ortungssystems ermittelt wurden und dem erkannten Wettergebiet zugeordnet sind.

Die Daten über ein oder mehrere Wettergebiete können mittels eines sogenannten Crowd-Sourcing Verfahrens ermittelt, bei dem die Kraftfahrzeuge der Verkehrsteilnehmer Daten zur Bestimmung der Position des Wettergebiets erzeugen. Dadurch ist es möglich, durch einen vergleichsweise niedrigen Aufwand aktuelle Daten für ein Wettergebiet zu erzeugen und auf Basis der Rasterunterteilung eine Ausdehnung des Wettergebiets bestimmen. Ferner kann die aktuelle Position eines wandernden Wettergebiets erfasst werden.

Die externe Servereinheit realisiert ein Backend, welches zum Empfang, zum Bereitstellen und zum Versenden von Daten ausgebildet ist. Zusätzlich kann ein weiteres Backend als eine zu der Servereinheit separate Einheit ausgebildet sein, welche einen Datentransfer und/oder eine Datenverarbeitung im Rahmen des Verfahrens ermöglicht. Mittels des Verfahrens ist somit eine rasterbasierte Rekonstruktion eines Wettergebiets durch Crowd-Sourcing in einem Backend möglich.

In Bezug auf die beschriebenen Messsignale weist die Sensorik einen jeweiligen Sensor oder eine jeweilige Vorrichtung auf, die ein Erfassen einer physikalischen Kenngröße und ein Generieren des zugehörigen Messsignals ermöglicht. So umfasst die Sensorik zum Beispiel eine Kamera, einen Positionssensor, einen Regensensor und/oder einen Helligkeitssensor, welcher zum Beispiel als Photodiode realisiert ist.

Gemäß einer bevorzugten Weiterbildung umfasst das Verfahren ein Ermitteln des lokalen Wettergebiets für eine jeweilige Gitterzelle sowie für die zu dieser Gitterzelle angrenzenden Gitterzellen in Abhängigkeit von dem Messsignal der Sensorik. Das Verfahren ermöglicht es, gefährliche Wettersituationen mittels der Kraftfahrzeug-Sensorik zuverlässig und ortsreferenziert zu erkennen. Mittels des rasterbasierten Verfahrens ist ein genaues Ermitteln des Wettergebiets möglich und es wird, insbesondere in Vernetzung mit verschiedenen anderen Kraftfahrzeugen, eine geographische Ausdehnung von Wetterphänomenen berücksichtigt. Mögliche Gefahrenwarnungen werden im Rahmen des Verfahrens nicht nur entlang der Straßenabschnitte dargestellt, an denen tatsächlich auch ein Kraftfahrzeug eine gefährliche Wettersituation erkannt hat, da eine Gefährdung auf den Straßen innerhalb der unmittelbaren Umgebung hochwahrscheinlich ist. Die Umgebung wird durch die jeweilige Gitterzelle miteinbezogen und vorzugsweise auch die zu ihr angrenzend ausgebildeten Gitterzellen.

Außerdem kann das Verfahren ein Erstellen einer Warnnachricht in Abhängigkeit von dem Messsignal der Sensorik umfassen. Eine solche Warnnachricht kann in der externen Servereinheit generiert und bereitgestellt werden und an nachfolgende Kraftfahrzeuge gezielt als eine Warnung noch vor Erreichen des gefährlichen Wettergebiets dargestellt werden. Beispielsweise erfolgt mittels einer zugehörigen Steuereinheit eine Informationsanzeige, welche in Abhängigkeit des ermittelten Wettergebiets die Reduktion der Geschwindigkeit vorschlägt.

Das Verfahren realisiert im Wesentlichen einen effizienten Ansatz zur Aggregation von wetterbedingten, geographisch ausgedehnten Warnmeldungen aus einer Flotte von Kraftfahrzeugen, bei dem mittels Mehrfachbestätigungen der Warnmeldungen und des ermittelten Wettergebiets durch mehrere verschiedene Kraftfahrzeuge die Rate von Falschmeldungen reduzieren lässt. Insbesondere lässt sich das beschriebene Verfahren effizient auf einer skalierenden Backend-Infrastruktur umsetzen. Eine ortbezogene Codierung der Gitterzellen mit einer festen Präzision ermöglicht zudem eine speichereffiziente Repräsentation des erstellten Rasters.

Die in der Servereinheit ankommenden Informationen werden verarbeitet und ausgewertet und vorzugsweise nicht direkt an andere Verkehrsteilnehmer weitergeleitet werden. Ein direktes Weiterleiten von Daten hätte zur Folge, dass Sensorrauschen und Fehlerkennungen auch direkt an andere Verkehrsteilnehmer gesendet werden und somit Falschmeldungen generieren und verbreiten.

Insbesondere kann im Rahmen des Verfahrens eine Kantenlänge der einzelnen Gitterzelle in Abhängigkeit von dem zu ermittelnden Wettergebiet vorgegeben ausgebildet werden. Gemäß einer bevorzugten Weiterbildung umfasst das Verfahren ein Konstruieren einer Trajektorie des Kraftfahrzeugs in Abhängigkeit von dem Messsignal der Sensorik und ein Ermitteln einer Überlappung zwischen der konstruierten Trajektorie und einer jeweiligen Gitterzelle. Das Verfahren umfasst daraufhin weiter ein Ermitteln des lokalen Wettergebiets für eine jeweilige Gitterzelle in Abhängigkeit von der ermittelten Überlappung. Auf Basis der ermittelten Überlappung kann das Wettergebiet ortsbezogen erkannt und lokalisiert werden.

Gemäß einer Weiterbildung umfasst das Verfahren ein Ermitteln eines aktuellen Fahrverhaltens des Kraftfahrzeugs in Abhängigkeit von Messsignalen der Sensorik und ein Ermitteln des lokalen Wettergebiets für eine jeweilige Gitterzelle in Abhängigkeit von dem ermittelten Fahrverhalten. Das Ermitteln des Fahrverhaltens kann zum Beispiel ein Ermitteln einer aktuelle Geschwindigkeit und/oder eines Bremsereignisses des Kraftfahrzeugs umfassen. Zum Beispiel kann die Reduktion der Geschwindigkeit des Kraftfahrzeugs mittels eines Geschwindigkeitssensors oder Positionssensors detektiert werden, und dazu genutzt werden, das ermittelte Wettergebiet zu plausibilisieren. In der Regel ist eine erkennbare Geschwindigkeitsreduktion von Kraftfahrzeugen zu erkennen, wenn diese in ein Schlechtwettergebiet einfahren.

Insbesondere kann das Verfahren auch ein Ermitteln eines lokalen Geschwindigkeitsprofils in Abhängigkeit einer Mehrzahl von einer jeweils ermittelten Geschwindigkeit eines jeweiligen Kraftfahrzeugs umfassen. Auf diese Weise kann ein Fahrverhalten in ein Detektieren des Wettergebiets mit einbezogen werden und dadurch das ermittelte Wettergebiet plausibilisieren, um eine Falscherkennungsrate gering zu halten.

Insbesondere kann das Verfahren gemäß einer bevorzugten Weiterbildung ein Bereitstellen und Auswerten einer Mehrzahl von jeweils ermittelten Wettergebieten, die verschiedenen Kraftfahrzeugen zugeordnet sind, umfassen. Auf Basis einer Mehrzahl von Wetterinformationen verschiedener Kraftfahrzeuge kann eine Ausdehnung eines jeweiligen Wettergebiets besonders zuverlässig und präzise ermittelt und eine Falschmeldungsrate gering gehalten werden.

Das Verfahren kann kraftfahrzeugseitig durchgeführt werden, allerdings erfolgt aufgrund einer Vielzahl von zu verarbeitenden Informationen und ermittelten Daten, die im Rahmen einer Fahrzeugflotte mit einer Vielzahl von Kraftfahrzeugen zusammengetragen werden können, ein Verarbeiten und Auswerten der empfangenen Daten sowie ein Ermitteln und Plausibilisieren des Wettergebiets vorteilhaft in einer externen Servereinheit und/oder Backend.

Ein jeweiliges Kraftfahrzeug, dem eine entsprechende Sensorik und Kommunikationsschnittstelle zugeordnet ist, realisiert somit eine mobile Messstation zum Ermitteln einer Wettergebiets, sodass zumindest ein Erfassen von wetterzugehörigen Kenngrößen und ein Generieren von Messsignalen mittels der Sensorik sowie das Übertragen der aufgenommenen Messsignale und/oder ausgewerteter Daten kraftfahrzeugseitig durchgeführt wird. Das jeweilige aufgenommene Messsignal und/oder das ermittelte ortbezogene Wettergebiet können mittels der Kommunikationsschnittstelle an die externe Servereinheit gesendet und gemäß dem beschriebenen Verfahren verarbeitet werden.

Somit ermöglicht das beschriebene Verfahren das Sammeln und Aggregieren von einer Vielzahl von ermittelten oder ermittelbaren Wettergebieten, die miteinander abgeglichen und dadurch mit einer geringen Falschmeldungsrate verifiziert werden können, welche weiter ein Erstellen einer nutzbringen Wetterkarte mit plausibilisierten Wettergebieten ermöglichen. Auf diese Weise ist ein nutzbringendes Kartographieren von verschiedenen Wettergebieten möglich, sodass nachfolgende Kraftfahrzeuge in Bezug auf das Wettergebiet vorgewarnt und zum Beispiel Alternativrouten in Betracht gezogen werden können. Insbesondere wird mittels des beschriebenen Verfahrens die Genauigkeit beim Bestimmen eines Wettergebiets dadurch erhöht, dass ein zusammenhängendes Wettergebiet jeweils durch verschiedene Kraftfahrzeuge ermittelt, eingegrenzt und plausibilisiert wird, sodass zu einer geringen Falschmeldungsrate beigetragen wird.

Das Verfahren realisiert eine gitterbasierte Aggregation der empfangenen Daten in der Servereinheit, bei dem zunächst eine Oberfläche der Erdkugel als bereitgestellte geographische Daten flächendeckend mit dem Raster überdeckt und in Gitterzellen unterteilt wird, wobei die Kantenlänge der Gitterzellen kleiner als eine charakteristische Ausdehnung der zu rekonstruierenden Wettergebiete vorgegeben ist. Zum Beispiel weisen die Gitterzellen zur Rekonstruktion eines Regengebiets eine Kantenlänge von einem Kilometer auf.

Aus den pro Kraftfahrzeug versendeten Warnnachrichten werden grobe Polyline-Trajektorien in nahezu Echtzeit rekonstruiert. Wird eine Gitterzelle von einer solchen Trajektorie geschnitten, so wird für diese Gitterzelle ein numerischer Zähler inkrementiert und ein zeitlicher Zähler neu gesetzt. Um Lücken zwischen den rekonstruierten Wettergebieten zu vermeiden werden außerdem die jeweiligen Zähler aller acht Nachbarzellen aktualisiert. Allerdings wird dieses Inkrementieren pro Kraftfahrzeug vorzugsweise nur maximal einmal innerhalb einer vorgegebenen Zeitspanne durchgeführt, um doppelte Meldungen von einem einzigen Kraftfahrzeug zu vermeiden.

Neben einer reinen Überschneidung von Trajektorien mit Gitterzellen können noch weitere Kriterien herangezogen werden, wie das zuvor beschriebene Fahrverhalten, um die Erkennung einer wetterbedingten Gefahrensituation zu plausibilisieren.

Ein weiterer Aspekt der Erfindung betrifft eine Vorrichtung zum Ermitteln eines Wettergebiets, die dazu eingerichtet ist, eines der zuvor beschriebenen Verfahren durchzuführen. Eine solche Vorrichtung ist beispielsweise als Servereinheit oder Backend realisiert und zum Empfangen, Verarbeiten und Versenden von Daten ausgebildet, die im Zusammenhang mit dem Verfahren ermittelt oder ausgewertet werden. Alternativ oder zusätzlich kann auch eine Steuereinheit des Kraftfahrzeugs als Vorrichtung zum Detektieren eines Wettergebiets und zum Durchführen eines der beschriebenen Verfahren befähigt sein. Aber insbesondere hinsichtlich einer Vielzahl von zu verarbeitenden Messsignalen, Daten und Informationen von unterschiedlichen Kraftfahrzeugen erfolgt ein Durchführen des beschriebenen Verfahrens vorzugsweise in einem zu dem Kraftfahrzeug externen Backend.

Außerdem betrifft ein weiterer Aspekt der Erfindung ein System zum Ermitteln eines Wettergebiets, welches ein Kraftfahrzeug und eine Ausgestaltung der zuvor beschriebenen Vorrichtung umfasst. Das Kraftfahrzeug weist die Sensorik die Kommunikationsschnittstelle auf und realisiert somit eine mobile Messstation zum Detektieren des Wettergebiets und ermöglicht insbesondere im Zusammenwirken innerhalb einer Fahrzeugflotte mit einer Vielzahl solcher Kraftfahrzeuge ein Erkennen und Plausibilisieren von Wettergebieten mit geringer Falscherkennungsrate.

Ausführungsbeispiele der Erfindung sind im Folgenden anhand der schematischen Zeichnungen näher erläutert. Es zeigen:
- Figur 1: ein schematisches Ausführungsbeispiel eines Systems zum Ermitteln eines Wettergebiets,
- Figur 2: ein weiteres schematisches Ausführungsbeispiel des Systems zum Ermitteln eines Wettergebiets,
- Figuren 3A-3D: ein schematisches Ausführungsbeispiel zum Ermitteln eines Wettergebiets,
- Figuren 4A-4B: ein schematisches Ausführungsbeispiel zum Ermitteln eines Wettergebiets,
- Figur 5: ein schematisches Ablaufdiagramm für Verfahren zum Ermitteln eines Wettergebiet.

Elemente gleicher Konstruktion oder Funktion sind figurenübergreifend mit den gleichen Bezugszeichen gekennzeichnet. Aus Gründen der Übersichtlichkeit sind die dargestellten Elemente gegebenenfalls nicht in allen Figuren mit Bezugszeichen gekennzeichnet.

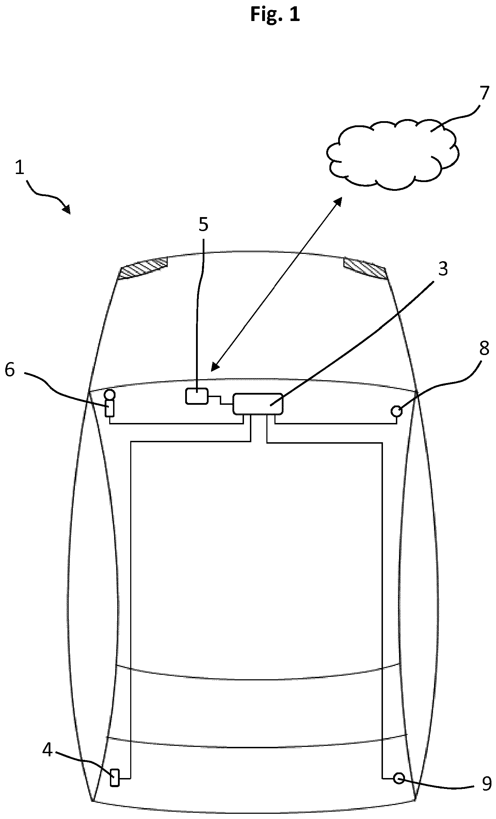

Figur 1 illustriert ein Ausführungsbeispiel eines Systems zum Ermitteln eines Wettergebiets 10 mit einem Kraftfahrzeug 1 in einer schematischen Aufsicht. Das System weist fernen eine Anordnung auf, die eine Kommunikationsschnittstelle 5 und eine Sensorik 4, 6, 8, 9 umfasst, die mittels einer Steuereinheit 3 des Kraftfahrzeugs 1 signaltechnisch mit der Kommunikationsschnittstelle 5 gekoppelt ist. Die Kommunikationsschnittstelle 5 ist dazu eingerichtet, bidirektional mit einer zu dem Kraftfahrzeug 1 externen Servereinheit 7 zu kommunizieren und Daten an diese zu senden und von dieser zu empfangen.

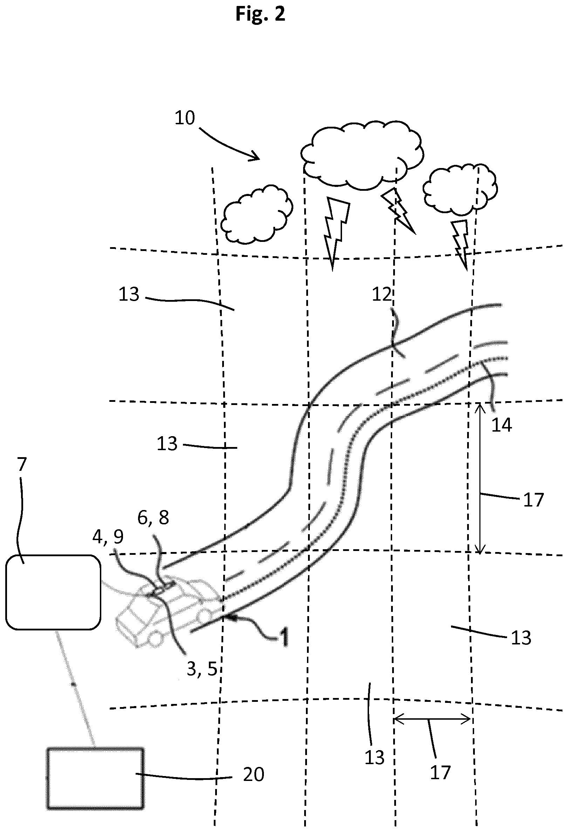

Die Anordnung mit der Sensorik 4, 6, 8, 9 und der Kommunikationsschnittstelle 5 ermöglicht das Erfassen einer jeweiligen physikalischen Kenngröße und das Generieren eines zugehörigen Messsignals, welches zum Ermitteln eines Wettergebiets 10 verarbeitet wird. Wie anhand der nachfolgenden Figuren 2 bis 5 erläutert wird, ermöglichen das System und das Verfahren ein zuverlässiges und präzises Erkennen eines Wettergebiets 10 und tragen zu einer geringen Falschmeldungsrate bei, welche sich weiter vorteilhaft auf den zugehörigen Straßenverkehr auswirken kann.

Die Sensorik ermöglicht das Erfassen von Messsignalen, die Daten mit wetterbezogenen Informationen umfassen oder zumindest Informationen, die sich auf das Ermitteln der Wettergebiets 10 auswirken können. Die Sensorik umfasst zum Beispiel einen Positionssensor 4, eine Kamera 6, einen Regensensor 8 und einen Helligkeitssensor 9 zum Erfassen zugehöriger Kenngrößen und Erzeugen zugehöriger Messsignale. Mittels des Positionssensors 4, beispielsweise einen GNSS-Sensor gemäß einem satellitengestützten Positionserfassungssystem, können aufgenommene Messsignale ortsbezogen und georeferenziert werden.

Die jeweiligen Messsignale können mittels der Sensorik generiert und mittels der Kommunikationsschnittstelle 5 zum Hinterlegen und Verarbeiten an die externe Servereinheit 7 und/oder ein Backend 20 gesendet werden (s. Figur 2). Das Erfassen von Messsignalen sowie das Versenden und Empfangen von Daten kann mittels der Steuereinheit 3 gesteuert werden. Ein Ermitteln von Daten beziehungsweise Kenngrößen und ein Durchführen des Verfahrens erfolgt vorzugsweise mittels einer Rechen- und Speichereinheit der Servereinheit 7 und/oder des Backends 20. Alternativ oder zusätzlich können Verfahrensschritte auch fahrzeugseitig in der Steuereinheit 3 durchgeführt werden, die dann entsprechend dazu befähigt ist. Dabei können die Servereinheit 7 und das Backend 20 zwei zueinander separate Einheiten realisieren und als eine gemeinsame zentrale Einheit ausgebildet sein.

Figur 2 illustriert schematisch das System nach Figur 1 auf einem Straßenabschnitt 12, welcher durch ein Wettergebiet 10 mit angedeutetem Gewitter führt. Das Kraftfahrzeug 1 weist die Sensorik 4, 6, 8, 9, die Steuereinheit 3 und die Kommunikationsschnittstelle 5 auf. Das Kraftfahrzeug 1 repräsentiert beispielsweise einen Personenkraftwagen und folgt dem Straßenverlauf, sodass mittels des Positionssensors 4 eine Trajektorie 14 eines Fahrtweges des Kraftfahrzeugs 1 ermittelt werden kann. Ferner kann mittels des Positionssensors 4 oder über die Raddrehzahl eine Ist-Geschwindigkeit als aktuelle Geschwindigkeit des Kraftfahrzeugs 1 ermittelt werden.

Das Kraftfahrzeug 1 überträgt die erfassten Ereignisse, wie beispielsweise das Erkennen von Regen, das Erkennen der Umgebungshelligkeit, die Trajektorie 14 und/oder die erfasste Geschwindigkeit, mittels der Kommunikationsschnittstelle 5 über eine drahtlose Netzwerkverbindung an eine Empfangseinrichtung der Servereinheit 7 und/oder des Backends 20. Die von der jeweiligen Empfangseinrichtung empfangenden Ereignisse umfassen den Typ des Ereignisses und eine Position, beispielsweise eine GNSS-Position, und werden georeferenziert.

Darüber hinaus werden im Rahmen des Verfahrens zum Ermitteln des Wettergebiets 10 Daten verarbeitet, die geographische Informationen, beispielsweise in Form einer Straßen- oder Landkarte enthalten. Mittels Erstellen eines Rasters wird die zur Verfügung stehende Landkarte in einzelne Gitterzellen 13 unterteilt, die zueinander angrenzen und eine jeweilige Kantenlänge 17 aufweisen. Die gerasterten geographischen Daten können eine jeweilige Länge und eine jeweilige Breite der jeweiligen Gitterzellen 13 unterschiedlich oder gleich ausgestaltet sein, sodass die Gitterzellen 13 entsprechend rechteckig oder quadratisch ausgebildet sind.

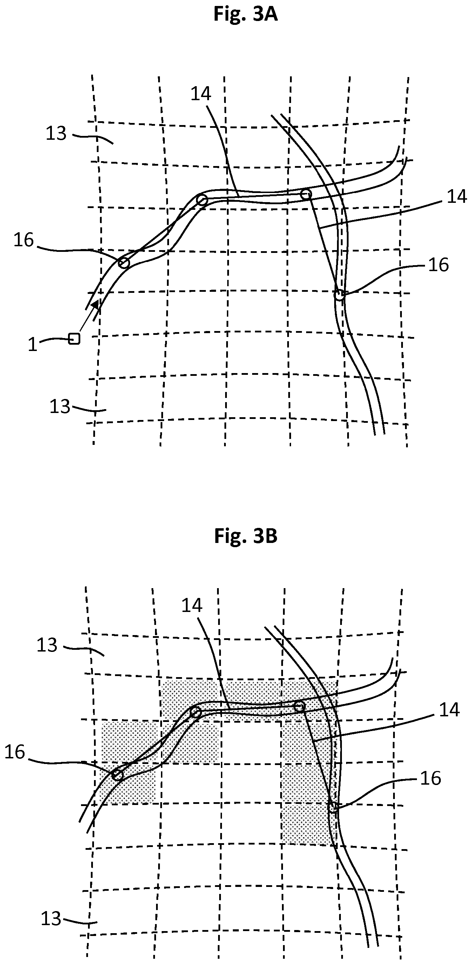

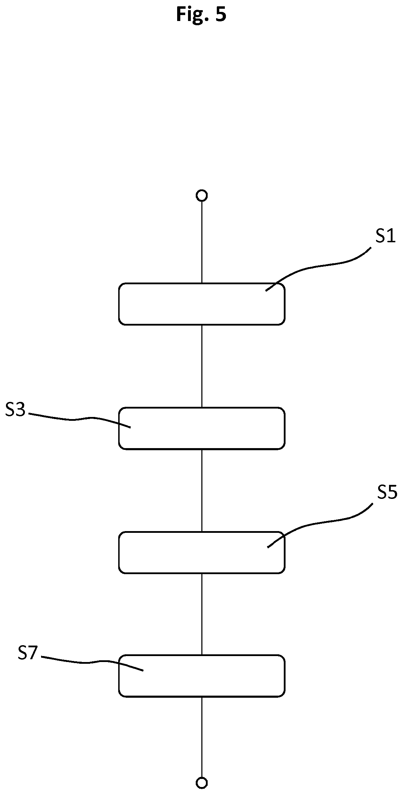

In den Figuren 3A bis 3D sind schematisch einzelne Schritte des Verfahrens zum Erkennen und Plausibilisieren des Wettergebiets 10 illustriert, welches gemäß dem Ablaufdiagramm nach Figur 5 durchgeführt werden kann. In einem Schritt S1 des Verfahrens werden zum Beispiel zur Verfügung stehende Daten von der Servereinheit 7 und/oder dem Backend 20 empfangen, welche Karteninformationen mit geographischen Daten umfassen. Diese Daten können zum Beispiel in Form einer digitalen Straßen- oder Landkarte von einem Kartenhersteller bereitgestellt sein.

In einem Schritt S3 des Verfahrens wird die bereitgestellte Landkarte gemäß einem Raster durch eine Vielzahl von Gitterzellen 13 unterteilt, die eine vorgegebene Kantenlänge 17 aufweisen (s. Figur 3A). Die Kantenlänge 17 ist zum Beispiel auf das zu ermittelnde Wettergebiet 10 abgestimmt ausgebildet, sodass beispielsweise bei Regen eine Kantenlänge 17 von einem Kilometer als nutzbringend erachtet werden kann.

In einem weiteren Schritt S5 wird zum Beispiel mittels des Regensensors 8 ein Messsignal aufgenommen und ermittelt, ob Regen vorliegt oder nicht. Eine solche Messwertaufnahme und das Ermitteln eines Wettergebiets 10 kann in vorgegebenen Zeitintervallen, zum Beispiel zyklisch in Minutenabständen, durchgeführt werden. Alternativ oder zusätzlich kann die Messwertaufnahme abhängig von der Geschwindigkeit des Kraftfahrzeugs 1 durchgeführt werden, da entsprechend der Geschwindigkeit größere oder kleinere Streckenabschnitte des Fahrtweges zurückgelegt werden. Die Positionen der Messwertaufnahme realisieren georeferenzierten Aktualisierungspositionen 16, anhand derer die Trajektorie 14 des Kraftfahrzeugs 1 ermittelt werden kann, welche zum Beispiel als Aneinanderreihung von geraden Abschnitten zwischen jeweils zwei Aktualisierungspositionen 16 gebildet wird (s. Figur 3A).

Beispielsweise wird alle 60 Sekunden und/oder alle zwei Kilometer eine Messwertaufnahme durchgeführt und eine Aktualisierungsposition 16 ausgebildet, vorzugsweise welches Ereignis von den beiden eher eintritt. Je nach Wahl einer Zellengröße der jeweiligen Gitterzellen 13 können auch andere Werte für eine Aktualisierungszeit oder einen Aktualisierungsort vorgegeben werden, um zum Beispiel in Abhängigkeit der Kantenlänge 17 und der daraus resultierenden Zellengröße der jeweiligen Gitterzellen 13 mindestens einen Messpunkt pro Gitterzelle 13 und Trajektorie 14 zu gewährleisten.

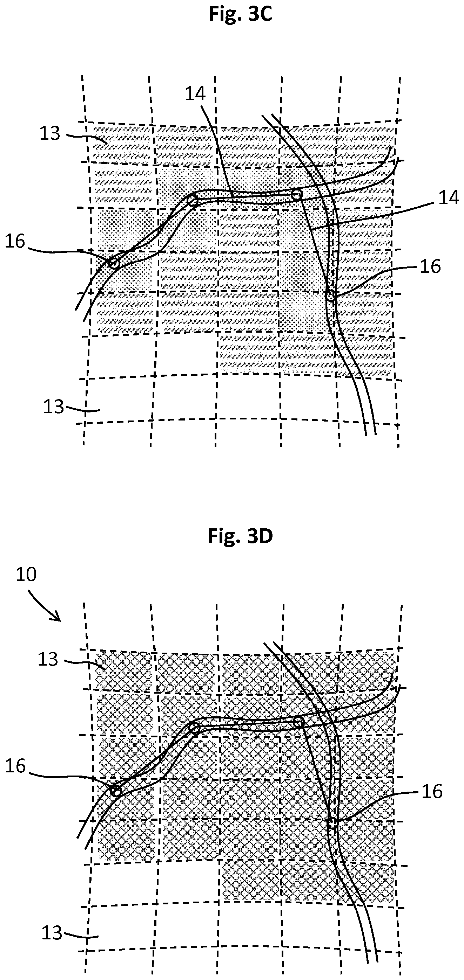

Wird zum Beispiel eine gefährliche Wettersituation detektiert, so erfolgt in einem weiteren Schritt S7 eine Übermittelung der zugehörigen Daten an die externe Servereinheit 7 und/oder das Backend 20. Gefährliche Wetterregionen können beispielsweise aus mindestens M zusammenhängenden Gitterzellen 13 rekonstruiert werden, die innerhalb der letzten T Sekunden von mindestens N Trajektorien 14 geschnitten wurden. Sensorrauschen und Fehlmeldungen können dadurch reduziert werden, dass die Anzahl an Trajektorien N>1 gewählt wird und somit pro Gitterzelle 13 Warnmeldungen von mehreren Kraftfahrzeugen 1 als Bestätigung gefordert werden. Jede geschnittene Gitterzelle 13 gilt als markiert und auch die ihr benachbarten Gitterzellen 13 werden in den Zustand "aktiv" gesetzt (vgl. Figuren 3B und 3C).

In einem weiteren Schritt S9 wird auf Basis der als aktiv geltenden Gitterzellen 13 ein zusammenhängendes Wettergebiet 10 ermittelt (vgl. Figur 3D). Sobald eine zusammenhängende Wetterregion 10 rekonstruiert wurde, kann für alle aktiven Gitterzellen 13 in dieser Region ein Timer oder ein zeitlicher Zähler gestartet werden. Werden neue Warnnachrichten innerhalb einer Gitterzelle 13 empfangen beziehungsweise anhand der entsprechenden Trajektorien 14 ermittelt, so wird dessen Timer zurückgestellt. Nach Ablauf des Timers wird die entsprechende Gitterzelle 13 wieder auf inaktiv gesetzt. Auf diese Weise lassen sich zum Beispiel sich bewegende Wetterregionen darstellen.

Auf Basis der ermittelten Wettergebiete können nun für alle Straßen Warnmeldungen ausgegeben werden, die von den Gitterzellen des rekonstruierten Wettergebiets 10 überdeckt sind.

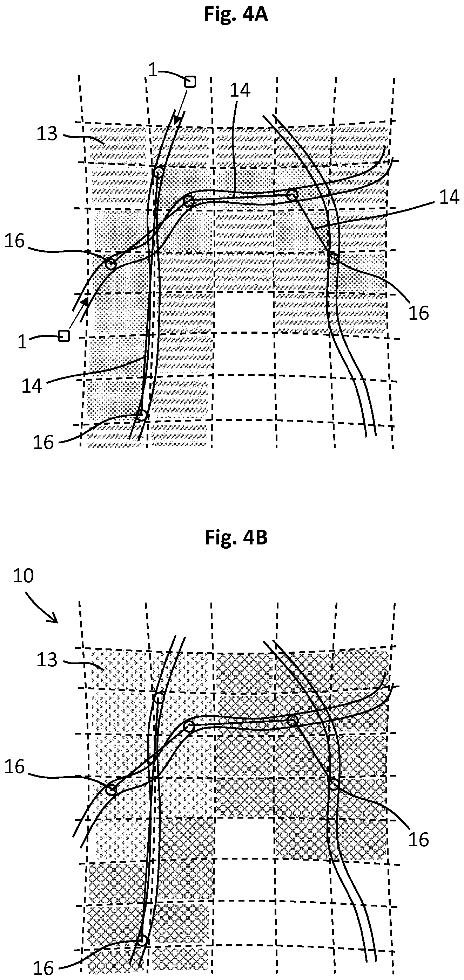

In den Figuren 4A und 4B ist analog zu den Figuren 3C und 3D das Markieren von Gitterzellen 13 und das zugehörige ermittelte Wettergebiet 10 illustriert, welches im Unterschied zu dem Ausführungsbeispiel gemäß den Figuren 3A bis 3D durch zwei Kraftfahrzeuge 1 ermittelt wurde. Insbesondere im Bereich der Überlappung von markierten oder als aktiv gesetzten Gitterzellen 13 (die im oberen linken Bildbereich markierten Gitterzellen 13) besteht eine höhere Genauigkeit des ermittelten Wettergebiets 10, da diese von zwei verschiedenen Kraftfahrzeugen durchfahren wurden und das jeweils ermittelte Wettergebiet 10 durch das andere Kraftfahrzeug 1 plausibilisiert wurde. Eine Warnmeldung kann insbesondere für den Überlappungsbereich von jeweils ermittelten Wettergebieten 10 ausgegeben werden.

Darüber hinaus können im Rahmen des Verfahrens insbesondere eine Vielzahl solcher erfasster Daten und ermittelter Informationen, die im Zusammenwirken als Fahrzeugflotte von unterschiedlichen Kraftfahrzeugen 1 jeweils gemäß dem Kraftfahrzeug 1 über die Servereinheit 7 und/oder das Backend 20 miteinander verarbeitet und ausgewertet werden. Ein solches Verfahren macht sich insbesondere eine Vernetzung von Kraftfahrzeugen 1 untereinander beziehungsweise eine Vernetzung einer Vielzahl von Kraftfahrzeugen 1 mit der externen Servereinheit 7 und/oder dem Backend 20 zu Nutze, sodass aufgrund der Fusion von ermittelten Daten mit empfangenen Karteninformationen sowie eine Verifizierung mittels sogenanntem Crowd-Sourcing ein besonders zuverlässiges Ermitteln und Plausibilisieren des Wettergebiets 10 möglich ist und zu einer geringen Falschmeldungsrate beigetragen werden kann.

### Bezugszeichenliste

- 1: Kraftfahrzeug
- 3: Steuereinheit
- 4: Positionssensor
- 5: Kommunikationsschnittstelle
- 6: Kamera
- 7: Servereinheit
- 8: Regensensor
- 9: Helligkeitssensor
- 10: Gewittergebiet
- 11: Raster
- 12: Straßenabschnitt
- 14: Trajektorie des Kraftfahrzeugs
- 16: Aktualisierungsposition
- 20: Backend

- S(i): jeweiliger Schritt eines Verfahrens zur Rekonstruktion einer Baustelle für ein Kraftfahrzeug

## Patentansprüche

1. Verfahren zum Ermitteln eines Wettergebiets (10) für ein Kraftfahrzeug (1), dem eine Sensorik (4, 6, 8, 9) und eine Kommunikationsschnittstelle (5) zugeordnet ist, die signaltechnisch miteinander gekoppelt sind, umfassend:
- Empfangen von Daten, die geographische Informationen in Form einer Karte umfassen,
- Erstellen eines Rasters (11) mittels Unterteilen der empfangenen Daten in eine Mehrzahl von zueinander angrenzenden Gitterzellen (13),
- Bereitstellen eines Messsignals der Sensorik, das repräsentativ ist für eine ortsbezogene lokale Wettersituation in einer der Gitterzellen (13),
- Ermitteln eines lokalen Wettergebiets (10) für eine jeweilige Gitterzelle (13) in Abhängigkeit von dem bereitgestellten Messsignal,
**gekennzeichnet durch**
- Setzen jeweils eines numerischen Zählers für eine jeweilige Gitterzelle (13), welcher in Abhängigkeit von dem Messsignal der Sensorik einen vorgegeben Wert aufweist, wobei der numerischen Zähler eine Information beinhaltet, dass ein Wettergebiet ermittelt wurde und der Zustand einer zugehörigen Gitterzelle als "aktiv" gesetzt ist, und
- Inkrementieren des jeweiligen numerischen Zählers der Gitterzelle (13), für die ein Messsignal der Sensorik bereitgestellt und/oder eine Wettersituation des Wettergebiets (10) ermittelt wird,
- Setzen jeweils eines zeitlichen Zählers für eine jeweilige Gitterzelle (13), welcher in Abhängigkeit von dem Messsignal der Sensorik einen vorgegeben Wert aufweist und repräsentativ ist für eine vorgegebene Zeitspanne, wobei nach Ablaufen der vorgegebenen Zeitspanne der Zustand der Gitterzelle auf "nicht aktiv" gesetzt wird und
- Neusetzen des jeweiligen zeitlichen Zählers der Gitterzelle (13), für die ein Messsignal der Sensorik bereitgestellt und/oder ein Wettergebiet (10) ermittelt wird.

2. Verfahren nach Anspruch 1, umfassend:
- Erstellen einer Warnnachricht in Abhängigkeit von dem Messsignal der Sensorik, und
- Ausgeben der erstellten Warnnachricht an ein Kraftfahrzeug (1), wenn dieses sich dem ermittelten Wettergebiet (10) nähert.

3. Verfahren nach einem der Ansprüche 1 bis 2, bei dem eine Kantenlänge (17) einer jeweiligen Gitterzelle (13) in Abhängigkeit von dem zu ermittelnden Wettergebiet (10) vorgegeben ausgebildet wird.

4. Verfahren nach einem der Ansprüche 1 bis 3, umfassend:
- Konstruieren einer Trajektorie (14) des Kraftfahrzeugs (1) in Abhängigkeit von dem Messsignal der Sensorik,
- Ermitteln einer Überlappung zwischen der konstruierten Trajektorie (14) und einer jeweiligen Gitterzelle (13), und
- Ermitteln des lokalen Wettergebiets (10) für eine jeweilige Gitterzelle (13) in Abhängigkeit von der ermittelten Überlappung.

5. Verfahren nach einem der Ansprüche 1 bis 4, umfassend:
Inkrementieren des jeweiligen Zählers der Gitterzelle (13), für die ein Wettergebiet (10) ermittelt wird und für die zu dieser Gitterzelle (13) angrenzenden Gitterzellen (13).

6. Verfahren nach einem der Ansprüche 1 bis 5, umfassend:
- Ermitteln eines aktuellen Fahrverhaltens des Kraftfahrzeugs (1) in Abhängigkeit von Messsignalen der Sensorik, und
- Ermitteln des lokalen Wettergebiets (10) für eine jeweilige Gitterzelle (13) in Abhängigkeit von dem ermittelten Fahrverhalten.

7. Verfahren nach einem der Ansprüche 1 bis 6, umfassend:
- Bereitstellen einer Mehrzahl von jeweils ermittelten Wettergebieten (10), die verschiedenen Kraftfahrzeugen zugeordnet sind, und
- Auswerten der Mehrzahl von ermittelten Wettergebieten (10) und Ermitteln einer Ausdehnung eines jeweiligen Wettergebiets (10).

8. Vorrichtung zum Ermitteln eines Wettergebiets (10), die dazu eingerichtet ist, ein Verfahren nach einem der Ansprüche 1 bis 7 durchzuführen.

9. Kraftfahrzeug (1) mit einer Vorrichtung zum Ermitteln eines Wettergebiets (10) nach Anspruch 8, das die Sensorik (6, 8, 9) und die Kommunikationsschnittstelle (5) aufweist, die signaltechnisch miteinander gekoppelt sind, wobei die Vorrichtung zum Ermitteln eines Wettergebiets (10) dazu eingerichtet ist, ein Verfahren nach einem der Ansprüche 1 bis 6 durchzuführen.

## Claims

1. Method for ascertaining a weather area (10) for a motor vehicle (1), assigned to which are a sensor system (4, 6, 8, 9) and a communications interface (5) that are signal-coupled to one another, comprising:
- receiving data comprising geographical information in the form of a map,
- creating a grid (11) by dividing the received data into a plurality of grid cells (13) that are adjacent to one another,
- providing a sensor system measured signal that is representative of a localized local weather situation in one of the grid cells (13),
- ascertaining a local weather area (10) for a respective grid cell (13) on the basis of the measured signal provided, **characterized by**
- setting a respective numerical counter, which has a predetermined value depending on the sensor system measured signal, for an associated grid cell (13), wherein the numerical counter contains information that a weather area has been ascertained and the state of an associated grid cell is set as "active", and
- incrementing the respective numerical counter of the grid cell (13) for which a sensor system measured signal is provided and/or a weather situation of the weather area (10) is ascertained,
- setting a respecting time counter, which has a predetermined value depending on the sensor system measured signal and which is representative for a predetermined time interval, for an associated grid cell (13), wherein the state of the grid cell is set to "not active" after expiration of the predetermined time interval, and
- resetting the respective time counter of the grid cell (13) for which a sensor system measured signal is provided and/or a weather area (10) is ascertained.

2. Method according to Claim 1, comprising:
- creating a warning message on the basis of the sensor system measured signal, and
- outputting the created warning message to a motor vehicle (1) when the latter approaches the ascertained weather area (10).

3. Method according to either of Claims 1 and 2, wherein an edge length (17) of a respective grid cell (13) is predetermined on the basis of the weather area (10) to be ascertained.

4. Method according to any of Claims 1 to 3, comprising:
- constructing a trajectory (14) of the motor vehicle (1) on the basis of the sensor system measured signal,
- ascertaining an overlap between the constructed trajectory (14) and a respective grid cell (13), and
- ascertaining the local weather area (10) for a respective grid cell (13) on the basis of the ascertained overlap.

5. Method according to any of Claims 1 to 4, comprising:
incrementing the respective counter of the grid cell (13) for which a weather area (10) is ascertained and for the grid cells (13) adjacent to this grid cell (13).

6. Method according to any of Claims 1 to 5, comprising:
- ascertaining a current driving behaviour of the motor vehicle (1) on the basis of sensor system measured signals, and
- ascertaining the local weather area (10) for a respective grid cell (13) on the basis of the ascertained driving behaviour.

7. Method according to any of Claims 1 to 6, comprising:
- providing a plurality of weather areas (10) that are ascertained in each case and associated with different motor vehicles, and
- evaluating the plurality of ascertained weather areas (10) and ascertaining an extent of a respective weather area (10).

8. Apparatus for ascertaining a weather area (10), configured to perform a method according to any of Claims 1 to 7.

9. Motor vehicle (1) having an apparatus for ascertaining a weather area (10) according to Claim 8, comprising the sensor system (6, 8, 9) and the communications interface (5) that are signal-coupled to one another, wherein the apparatus for ascertaining a weather area (10) is configured to perform a method according to any of Claims 1 to 6.

## Revendications

1. Procédé permettant de déterminer une zone météorologique (10) pour un véhicule automobile (1) auquel sont associés un système de capteurs (4, 6, 8, 9) et une interface de communication (5) qui sont couplés ensemble en termes de signal, comprenant les étapes consistant à :
- recevoir des données qui comprennent des informations géographiques sous la forme d'une carte,
- créer une grille (11) au moyen d'une division des données reçues en une pluralité de cellules de grille (13) adjacentes les unes aux autres,
- fournir un signal de mesure du système de capteurs qui représente une situation météorologique locale localisée dans l'une des cellules de grille (13),
- déterminer une zone météorologique (10) locale pour une cellule de grille (13) respective en fonction du signal de mesure fourni, **caractérisé par** les étapes consistant à
- définir respectivement un compteur numérique pour une cellule de grille (13) respective qui présente une valeur prédéfinie en fonction du signal de mesure du système de capteurs, dans lequel le compteur numérique comporte une information indiquant qu'une zone météorologique a été déterminée et que l'état d'une cellule de grille associée a été défini comme « actif », et
- incrémenter le compteur numérique respectif de la cellule de grille (13) pour laquelle un signal de mesure du système de capteurs est fourni et/ou une situation météorologique de la zone météorologique (10) est déterminée,
- définir respectivement un compteur temporel pour une cellule de grille (13) respective, qui présente une valeur prédéfinie en fonction du signal de mesure du système de capteurs et représente un laps de temps prédéfini, dans lequel, après expiration du laps de temps prédéfini, l'état de la cellule de grille est défini comme « non actif », et
- redéfinir le compteur numérique respectif de la cellule de grille (13) pour laquelle un signal de mesure du système de capteurs est fourni et/ou une zone météorologique (10) est déterminée.

2. Procédé selon la revendication 1, comprenant les étapes consistant à :
- créer un message d'avertissement en fonction du signal de mesure du système de capteurs, et
- émettre le message d'avertissement créé à un véhicule automobile (1) lorsque celui-ci s'approche de la zone météorologique (10) déterminée.

3. Procédé selon l'une quelconque des revendications 1 à 2, dans lequel une longueur d'arête (17) d'une cellule de grille (13) respective est réalisée de manière prédéfinie en fonction de la zone météorologique (10) déterminée.

4. Procédé selon l'une quelconque des revendications 1 à 3, comprenant les étapes consistant à :
- construire une trajectoire (14) du véhicule automobile (1) en fonction du signal de mesure du système de capteurs,
- déterminer un chevauchement entre la trajectoire construite (14) et une cellule de grille (13) respective, et
- déterminer la zone météorologique (10) locale pour une cellule de grille (13) respective en fonction du chevauchement déterminé.

5. Procédé selon l'une quelconque des revendications 1 à 4, comprenant les étapes consistant à :
incrémenter le compteur respectif de la cellule de grille (13) pour qui une zone météorologique (10) est déterminée et pour les cellules de grille (13) adjacentes à cette cellule de grille (13).

6. Procédé selon l'une quelconque des revendications 1 à 5, comprenant les étapes consistant à :
- déterminer un comportement de conduite actuel du véhicule automobile (1) en fonction des signaux de mesure du système de capteurs, et
- déterminer la zone météorologique (10) locale pour une cellule de grille (13) respective en fonction du comportement de conduite déterminé.

7. Procédé selon l'une quelconque des revendications 1 à 6, comprenant les étapes consistant à :
- fournir une pluralité de zones météorologiques (10) respectivement déterminées qui sont associées à différents véhicules automobiles, et
- évaluer la pluralité de zones météorologiques (10) déterminées et déterminer une étendue d'une zone météorologique (10) respective.

8. Dispositif permettant de déterminer une zone météorologique (10), qui est conçu pour exécuter un procédé selon l'une quelconque des revendications 1 à 7.

9. Véhicule automobile (1) comprenant un dispositif permettant de déterminer une zone météorologique (10) selon la revendication 8, qui présente le système de capteurs (6, 8, 9) et l'interface de communication (5) qui sont couplés ensemble en termes de signal, dans lequel le dispositif permettant de déterminer une zone météorologique (10) est conçu pour exécuter un procédé selon l'une quelconque des revendications 1 à 6.
